# EUROPÄISCHE PATENTSCHRIFT

(11) **EP 4 437 245 B1**
(45) Veröffentlichungstag und Bekanntmachung des Hinweises auf die Patenterteilung: **28.10.2026**
(21) Anmeldenummer: 22808948.8
(22) Anmeldetag: 10.11.2022
(51) Int. Cl.: F16F 15/14, F16F 15/134

(54) **FLIEHKRAFTPENDEL MIT RADIAL INNENLIEGENDEM ANSCHLAGSDÄMPFER**
CENTRIFUGAL FORCE PENDULUM COMPRISING RADIALLY INTERNAL STOP DAMPER
PENDULE À FORCE CENTRIFUGE COMPRENANT UN AMORTISSEUR D'ARRÊT RADIALEMENT INTERNE

(30) Priorität: 26.11.2021 DE 102021131102
(43) Veröffentlichungstag der Anmeldung: 02.10.2024
(73) Patentinhaber: Schaeffler Technologies AG & Co. KG, 91074 Herzogenaurach (DE)
(72) Erfinder: FRANZ, Evgenij, 76437 Rastatt (DE)
(74) Vertreter: Schaeffler Technologies
(86) Internationale Anmeldenummer: PCT/DE2022/100834
(87) Internationale Veröffentlichungsnummer: WO 2023/093936

(56) Entgegenhaltungen:
- DE-A1- 102016 213 545
- DE-A1- 102017 129 511
- DE-A1- 102019 128 064
- FR-A1- 2 986 592
- FR-A1- 3 010 471
- FR-A1- 3 047 785

## Beschreibung

Die vorliegende Erfindung betrifft ein Fliehkraftpendel gemäß dem Oberbegriff des Anspruchs 1 mit radial innenliegendem Anschlagsdämpfer. Das erfindungsgemäße Fliehkraftpendel wird insbesondere im Antriebsstrang von Kraftfahrzeugen zur Dämpfung oder Tilgung von Torsionsschwingungen eingesetzt.

Fliehkraftpendel zum Einsatz in Antriebssträngen von Kraftfahrzeugen sind bekannt. Sie dienen der Dämpfung von Schwingungen im Antriebsstrang und werden oft in Verbindung mit Torsionsschwingungsdämpfern eingesetzt. Fliehkraftpendel weisen mindestens einen Pendelflansch und Pendelmassen auf, die auf vorgegebenen Bewegungsbahnen unter Fliehkraftwirkung relativ zum Pendelflansch bewegbar sind. Durch die Auslegung der Pendelmassen und der Bewegungsbahnen kann so erreicht werden, dass bestimmte Drehschwingungsfrequenzen im Antriebsstrang gedämpft werden. Erreicht eine Pendelmasse ein Ende der Bewegungsbahn, so schlägt sie an das Ende der Bewegungsbahn an. Hierdurch entstehen Geräusche im Antriebsstrang, zudem wird das Ende der Bewegungsbahn belastet und gegebenenfalls verschlissen.

Um dieses Problem zu reduzieren, sind Anschlagsdämpfer bekannt. So offenbart die DE 10 2015 212 737 A1 einen Anschlagsdämpfer, der als eine elastomere Kugel ausgebildet ist, die in einer radial innenliegenden Aussparung der Pendelmasse angeordnet ist. Diese Ausgestaltung hat den Nachteil, dass die Größe der Kugel durch die Dicke der Pendelmasse begrenzt ist. Insbesondere bei relativ schweren Pendelmassen reicht die dadurch erreichbare Dämpfung nicht mehr aus.

Aus der DE 10 2016 213 545 A1 ist ein Fliehkraftpendel bekannt, das auf den Oberbegriff des Anspruchs 1 lesbar ist.

Der vorliegenden Erfindung liegt die Aufgabe zugrunde, die aus dem Stand der Technik bekannten Probleme zumindest teilweise zu überwinden.

Diese Aufgabe wird gelöst mit den Merkmalen des unabhängigen Anspruchs 1. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Das erfindungsgemäße Fliehkraftpendel umfasst zwei rotationsfest miteinander verbundene Pendelflansche, die um eine Rotationsachse drehbar sind und die in Richtung der Rotationsachse einen Pendelmassenaufnahmeraum zwischen den Pendelflanschen definieren und mindestens eine in dem Pendelmassenaufnahmeraum angeordnete Pendelmasse, die relativ zu den Pendelflanschen auf zumindest einer Bewegungsbahn bewegbar ist, die durch Ausnehmungen in den Pendelflanschen und der Pendelmasse definiert ist, wobei sich Rollenkörper durch die Ausnehmungen erstrecken, wobei an jeder Pendelmasse ein Anschlagsdämpfer ausgebildet ist. Das Fliehkraftpendel zeichnet sich dadurch aus, dass der Anschlagsdämpfer an einer radialen Innenseite der Pendelmasse angeordnet ist und mindestens zwei Durchgangsöffnungen aufweist, in oder sogar durch die sich Befestigungselemente erstrecken, die den Anschlagsdämpfer mit der Pendelmasse verbinden.

Das Fliehkraftpendel wird insbesondere im Antriebsstrang von Kraftfahrzeugen eingesetzt, die einen Verbrennungsmotor als Drehmomentquelle aufweisen. Zusätzlich kann der Antriebsstrang auch einen oder mehrere Elektromotoren als Drehmomentquelle aufweisen. Das Fliehkraftpendel bewirkt eine Dämpfung oder Tilgung bestimmter Schwingungsfrequenzen von Torsionsschwingungen im Antriebsstrang. Durch den Anschlagsdämpfer wird verhindert, dass durch das Anschlagen der Pendelmasse an die Pendelflansche Geräusche entstehen und/oder Pendelflansch und/oder Pendelmasse verschleißen. Durch die Anordnung des Anschlagsdämpfers radial innen an der Pendelmasse und die Anbindung an die Pendelmasse durch Befestigungselemente, die sich in oder durch die Durchgangsöffnungen erstrecken, kann eine Dämpfungswirkung erreicht werden, die unabhängig von der Dicke, also der Erstreckung in Richtung der Rotationsachse, der Pendelmasse ist.

Der Anschlagsdämpfer schlägt dabei an einem anderen Bauteil an, insbesondere einem Kontaktabschnitt eines der Pendelflansche. Der Anschlagsdämpfer ist einfach an der Pendelmasse montierbar, insbesondere vormontierbar, so dass dann die Pendelmasse mit montiertem Anschlagsdämpfer montiert werden kann. Die Pendelmasse weist bevorzugt an der radialen Innenseite, bezogen auf die Rotationsachse, eine Montageausnehmung auf, die zur Kontur des Anschlagsdämpfers korrespondierend ausgebildet ist.

Bevorzugt umfassen die Befestigungselemente Stiftverbindungen. Diese sind durch Stifte gebildet, die im Vergleich zu den Durchgangsöffnungen ein Übermaß aufweisen, so dass ein Kraft- und Formschluss zwischen Stift und Durchgangsöffnung gebildet wird.

Bevorzugt bilden die Befestigungselemente eine Schnappverbindung. Dies ist insbesondere dann bevorzugt, wenn zwei Befestigungselemente vorhanden sind, die von beiden Seiten in die Durchgangsöffnung greifen und miteinander eine Schnappverbindung bilden. Bevorzugt weist in diesem Falle jedes Befestigungselement einen Schnapphaken auf.

Jede Pendelmasse weist mindestens ein Reibelement auf, das in Richtung der Rotationsachse auf einer Seite der Pendelmasse ausgebildet ist und an der Pendelmasse anliegt. Reibelemente sind insbesondere aus einem elastomeren Kunststoff ausgebildet und wirken regelmäßig mit korrespondierenden Reibelementen an einem der Pendelflansche zusammen, um eine Bremsung der Pendelmasse relativ zum Pendelflansch zu bewirken. Weiterhin bevorzugt ist eine Ausgestaltung, bei der zwei Reibelemente ausgebildet sind, die auf in Bezug auf die Rotationsachse gegenüberliegenden Seiten der Pendelmasse ausgebildet sind.

Jedes Reibelement weist Schnappelemente als Befestigungselemente auf, die sich in oder durch die Durchgangsöffnungen des Anschlagsdämpfers erstrecken. Werden zwei Reibelemente auf gegenüberliegenden Seiten des Pendelflansches ausgebildet, wirken bevorzugt die Schnappelemente der beiden Reibelemente zur Bildung einer Schnappverbindung in der jeweiligen Durchgangsöffnung zusammen. Dies ermöglicht eine einfache Montage des Anschlagsdämpfers und der Reibelemente.

Bevorzugt ist das Schnappelement einstückig mit dem Reibelement ausgebildet.

Dies ermöglicht eine einfache Montage des Anschlagsdämpfers. Das Reibelement kann beispielsweise durch einen Spritzgussvorgang einfach mit dem Schnappelement aus einem Kunststoff hergestellt werden.

Bevorzugt weist jedes Reibelement mindestens zwei Stifte auf, die in entsprechende Ausnehmungen der Pendelmasse eingreifen. Hierdurch können Stiftverbindungen zum Fixieren des Reibelementes an der Pendelmasse gebildet werden. Bevorzugt weist der Stift in einer Ebene senkrecht zur Rotationsachse ein Übermaß im Vergleich zur entsprechenden Ausnehmung in der Pendelmasse auf.

Bevorzugt ist der Anschlagsdämpfer zumindest teilweise aus einem elastomeren Material ausgebildet. Insbesondere ist ein Dämpfungsabschnitt des Anschlagsdämpfers aus einem Elastomer ausgebildet, alternativ der gesamte Anschlagsdämpfer

Weiterhin wird ein Torsionsschwingungsdämpfer vorgeschlagen, umfassend ein Eingangsteil, ein Ausgangsteil und eine Federeinrichtung, wobei Eingangsteil und Ausgangsteil relativ zueinander gegen die Wirkung der Federeinrichtung um eine Rotationsachse rotierbar sind, wobei Eingangsteil und/oder Ausgangsteil drehfest mit einem erfindungsgemäßen Fliehkraftpendel verbunden sind.

Hierbei ist das Eingangsteil bevorzugt direkt oder indirekt mit einem Verbrennungsmotor verbunden oder verbindbar, beispielsweise über eine Reibkupplung zum An- und Abkuppeln des Verbrennungsmotors an den Antriebsstrang. Bevorzugt ist das Ausgangsteil drehfest mit dem Fliehkraftpendel verbunden. Bevorzugt umfasst der Torsionsschwingungsdämpfer radial innen eine Rutschkupplung als Drehmomentbegrenzer.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: einen Querschnitt durch einen Torsionsschwingungsdämpfer mit einem Beispiel eines Fliehkraftpendels;
- Fig. 2:: eine Draufsicht auf ein Fliehkraftpendel;
- Fig. 3 bis 5:: verschiedene Schnitte einer Pendelmasse eines Fliehkraftpendels mit Reibelementen;
- Fig. 6: perspektivische Ansicht eines Reibelementes;
- Fig. 7- 8:: zwei Ansichten eines Anschlagsdämpfers;
- Fig. 9:: Explosionsdarstellung einer Pendelmasse mit Reibelementen und Anschlagsdämpfer; und
- Fig. 10:: eine perspektivische Ansicht einer Pendelmasse mit montierten Reibelementen und Anschlagsdämpfer.

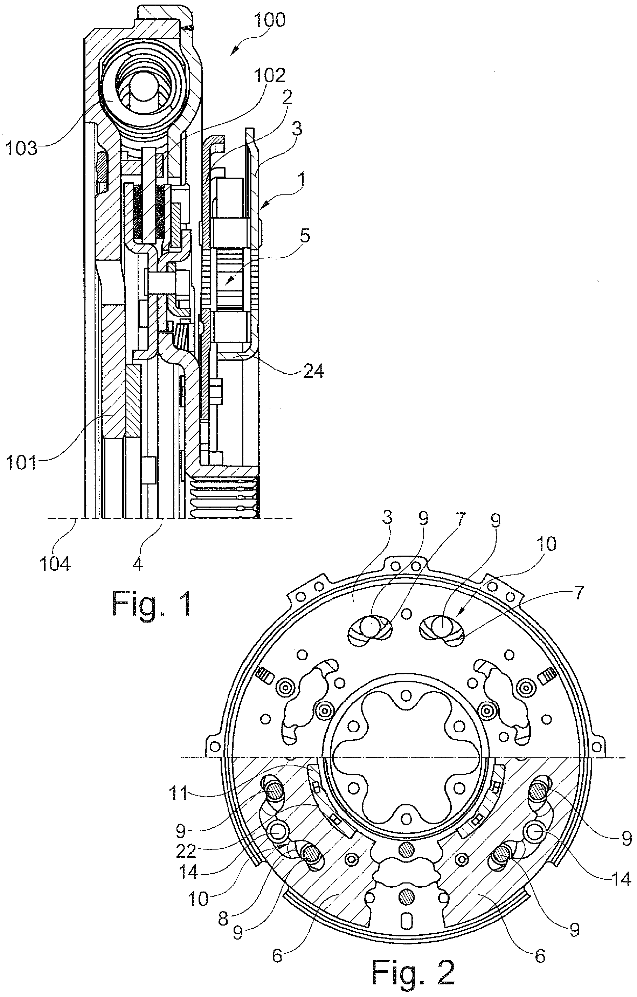

Fig. 1 zeigt einen Torsionsschwingungsdämpfer 100 im Querschnitt. Der Torsionsschwingungsdämpfer 100 umfasst ein Eingangsteil 101 und ein Ausgangsteil 102. Eingangsteil 101 und Ausgangsteil 102 sind gegen die Wirkung einer Federeinrichtung 103 gegeneinander um eine Rotationsachse 104 rotierbar. Bevorzugt ist das Eingangsteil direkt oder indirekt mit einer nicht gezeigten Abtriebswelle eines nicht gezeigten Verbrennungsmotors verbunden. Eine direkte Verbindung kann beispielsweise dadurch erfolgen, dass das Eingangsteil 101 drehfest mit der Kurbelwelle oder eine Schwungmasse des Verbrennungsmotors verbunden ist. Eine indirekte Verbindung kann dadurch erreicht werden, dass mindestens ein weiteres Element wie beispielsweise eine Reibkupplung zwischen dem Verbrennungsmotor und dem Torsionsschwingungsdämpfer 100 ausgebildet ist.

Mit dem Ausgangsteil 102 des Torsionsschwingungsdämpfers 100 ist ein Fliehkraftpendel 1 drehfest verbunden. Das Fliehkraftpendel 1 umfasst einen ersten Pendelflansch 2 und einen zweiten Pendelflansch 3, die um eine Rotationsachse 4, die der Rotationsachse 104 entspricht, rotieren können. Der erste Pendelflansch 2 und der zweite Pendelflansch 3 sind drehfest miteinander verbunden und definieren in Richtung der Rotationsachse 4 zwischen dem ersten Pendelflansch 2 und dem zweiten Pendelflansch 3 einen Pendelmassenaufnahmeraum 5.

Fig. 2 zeigt eine Draufsicht des Fliehkraftpendels 1 aus Fig. 1, die Blickrichtung ist dabei aus Richtung rechts in Fig. 1. In Fig. 2 ist nur ein Teil des zweiten Pendelflanschs 3 gezeigt, so dass die in Richtung der Rotationsachse 4 zwischen dem ersten Pendelflansch 2 und dem zweiten Pendelflansch 3 liegenden Pendelmassen 6. Insgesamt weist dieses Beispiel eines Fliehkraftpendels 1 drei Pendelmassen 6 auf, die über den Umfang - bezogen auf die Rotationsachse 4 - gleichmäßig verteilt sind und in einer gemeinsamen Ebene, die normal zur Rotationsachse 4 ist, liegen. Das zweite Pendelflansch 3 wie auch das erste Pendelflansch 2 weisen Ausnehmungen 7 auf, während jede Pendelmasse 6 Ausnehmungen 8 aufweist. In den Ausnehmungen 7, 8 sind Rollenkörper 9 ausgebildet, die eine Bewegung der Pendelmassen 6 gegenüber dem ersten Pendelflansch 2 und dem zweiten Pendelflansch 3 zum Dämpfen bestimmter Frequenzen zu ermöglichen. Hierbei bewegen sich die Rollenkörper 9 in den Ausnehmungen 7, 8, die Bewegungsbahnen 10 bilden, die so definiert sind, dass sie die gewünschte fliehkraftinduzierte Pendelbewegung der Pendelmassen 6 relativ zu den Pendelflanschen 2, 3 ermöglichen.

Radial innen weist jede Pendelmasse 6 einen Anschlagsdämpfer 11 auf. Pendelmasse 6, Anschlagsdämpfer 11 und zweiter Pendelflansch 3 sind dabei so gestaltet, dass bei Maximalauslenkung der Pendelmasse 6 der Anschlagsdämpfer 11 eine Dämpfung der Bewegung der Pendelmasse 6 bewirkt. Die Ausbildung radial innen bedeutet, dass in einem nicht ausgelenkten Zustand wie in Fig. 2 gezeigt die Anschlagsdämpfer 11 nach radial innen bezogen auf die Rotationsachse 4 die Pendelmasse 6 überragen, so dass es radial innen nur zu einem Kontakt mit dem Anschlagsdämpfer 11 kommen kann, nicht jedoch mit der Pendelmasse 6. Der Anschlagsdämpfer 11 ist bevorzugt aus einem elastomeren Material ausgebildet.

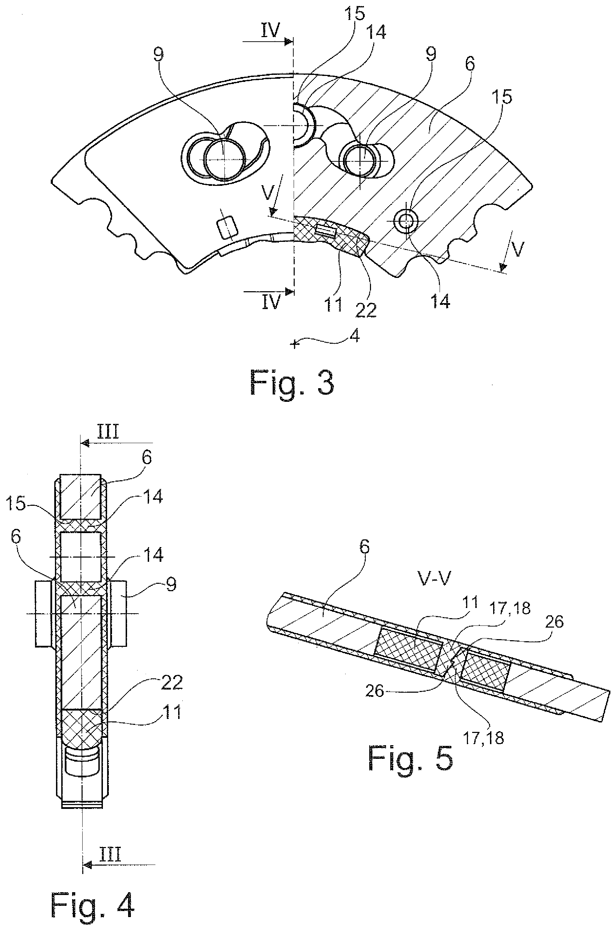

Der Anschlagsdämpfer 11 und ein bevorzugtes Beispiel seiner Montage an der Pendelmasse 6 wird im Folgenden insbesondere unter Bezugnahme auf die Figs. 3 bis 8 näher beschrieben. Diese Figuren werden im Folgenden - so nicht explizit anders angegeben - gemeinsam beschrieben. Fig. 3 bis 6 zeigt verschiedene Schnitte durch die Pendelmasse 6. Fig. 3 zeigt dabei den Schnitt wie in Fig. 4 mit "III-III" angegeben, Fig. 4 den Schnitt wie in Fig. 3 mit "IV-IV" angegeben und Fig. 5 den Schnitt wie in Fig. 3 mit "V-V" angegeben.

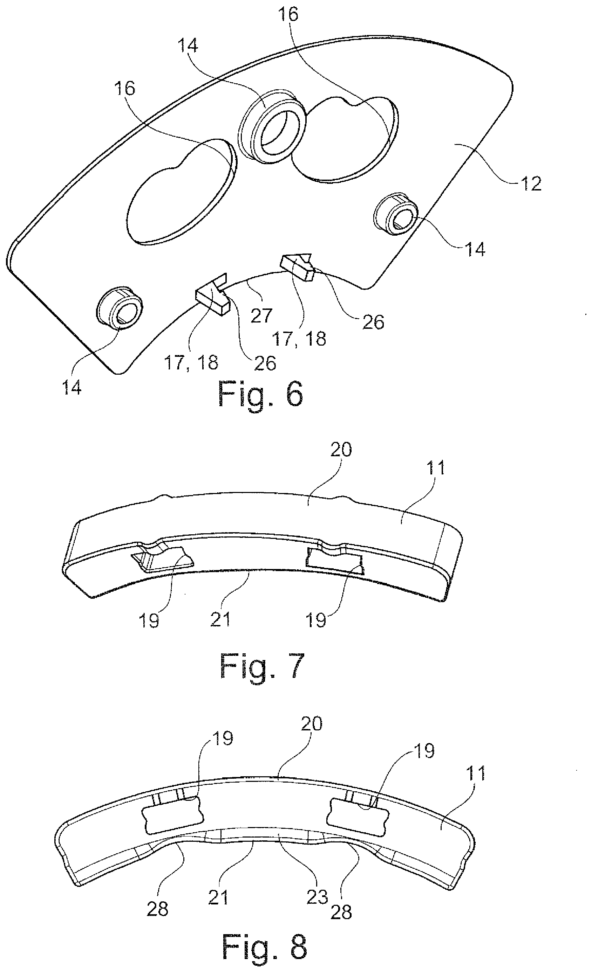

Die Pendelmasse 6 ist in diesem Beispiel mit zwei Reibelementen 12 versehen, die an den in Richtung der Rotationsachse 4 gegenüberliegenden Längsseiten 13 der Pendelmasse anliegen. Ein Reibelement 12 ist in perspektivischer Ansicht in Fig. 6 gezeigt. Das Reibelement 12 weist Stifte 14 auf, in diesem Beispiel drei Stifte 14. Über die Stifte 14 wird das Reibelement 12 mit einer Pendelmasse 6 verbunden, die in entsprechende Ausnehmungen 15 der Pendelmasse 6 gepresst werden und so eine form- und kraftschlüssige Verbindung zwischen Reibelement 12 und Pendelmasse 6 ausgebildet. Die Stifte 14 weisen ein entsprechendes Übermaß zu den entsprechenden Ausnehmungen 15 auf. Das Reibelement 12 weist ebenfalls Ausnehmungen 16 auf, die den Ausnehmungen 8 der Pendelmasse zur Bildung der Bewegungsbahn 10 entsprechen.

Weiterhin weist das Reibelement 12 an einer radialen Innenseite 27 zwei Befestigungselemente 17 auf. Diese sind als Schnappelemente 18 mit entsprechenden Schnapphaken 26 ausgebildet. Der Anschlagsdämpfer 11 (vgl. insbesondere Fig. 7 und 8) weist zwei Durchgangsöffnungen 19 auf, deren Position und Abstand so gewählt sind, dass bei der Montage des Reibelementes 12 mit dem Anschlagsdämpfer 11 an der Pendelmasse 6 die Befestigungsmittel 17 durch die Durchgangsöffnungen 19 greifen. Im vorliegenden Beispiel (vgl. insb. Fig. 5) werden pro Pendelmasse 6 zwei Reibelemente 11 ausgebildet, so dass bei der Montage die Schnapphaken 18 der beiden Reibelemente 11 die Durchgangsöffnungen 19 des Anschlagsdämpfers 11 durchgreifen und eine Schnappverbindung bilden.

Der Anschlagsdämpfer 11 weist im verbauten Zustand in radialer Richtung bezogen auf die Rotationsachse 4 eine konvexe Außenoberfläche 20 und eine Innenoberfläche 21 auf. Die Außenoberfläche 20 korrespondiert dabei zu einer Montageausnehmung 22 der Pendelmasse 6 (vgl. insb. Fig. 3). Die Innenoberfläche 21 weist einen Dämpfungsabschnitt 23 auf, der die Dämpfungsfunktion, insbesondere im Kontakt mit einem Kontaktabschnitt 24 des zweiten Pendelflansch 3 (vgl. Fig. 1) bewirkt. Der Dämpfungsabschnitt 23 weist zwei Vertiefungen 28 auf, deren Position mit der Position der Durchgangsöffnungen 19 entspricht. Hierdurch wird erreicht, dass beim Aufprall des Aufschlagsdämpfers 11 die Kraft, die in den Bereich der Durchgangsöffnungen 19 und damit in den Bereich der dort ausgebildeten Befestigungselemente 17 eingeleiteten Kräfte reduziert werden, so dass die Befestigungselemente 17 im Betrieb geschont werden.

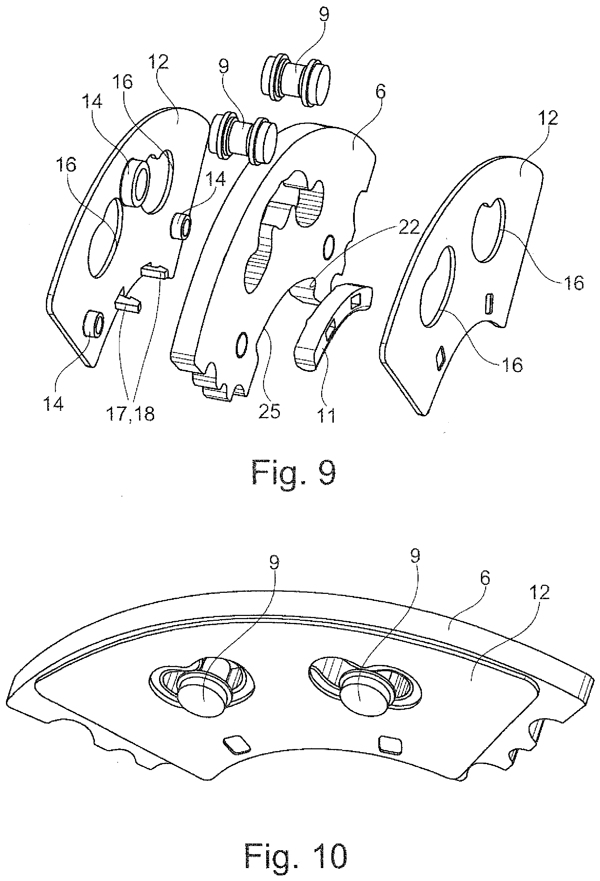

Fig. 9 zeigt eine Explosionsdarstellung einer Pendelmasse 6 mit Reibelementen 12, Anschlagsdämpfer 11 und Rollenkörpern 9. An der Pendelmasse 6 ist die radiale Innenseite 25 gezeigt, an der die Montageausnehmung 22 ausgebildet ist. Fig. 10 zeigt eine perspektivische Ansicht der Pendelmasse 6 mit montierten Reibelementen 12 und Rollenkörpern 9.

Das Fliehkraftpendel 1 weist an seiner radialen Innenseite 25 einen Anschlagsdämpfer 11 auf, durch den Anschlagvorgänge der Pendelmasse 6 an einem der Pendelflansche 2, 3 gedämpft werden. Der Anschlagsdämpfer 11 weist zwei Durchgangsöffnungen 19 auf, in oder durch die sich Befestigungselemente 17, 8 erstrecken. Hierdurch ist der Anschlagsdämpfer 11 einfach zu montieren und an der Pendelmasse 6 vorzumontieren. Weist die Pendelmasse 6 gleichzeitig ein oder zwei Reibelemente 12 auf, so kann die Fixierung des Anschlagsdämpfers 11 an der Pendelmasse bevorzugt durch Befestigungselemente 17, 18 erfolgen, die an dem Reibelement 12 angeformt sind.

### Bezugszeichenliste

- 1: Fliehkraftpendel
- 2: Erster Pendelflansch
- 3: Zweiter Pendelflansch
- 4: Rotationsachse
- 5: Pendelmassenaufnahmeraum
- 6: Pendelmasse
- 7: Ausnehmung
- 8: Ausnehmung
- 9: Rollenkörper
- 10: Bewegungsbahn
- 11: Anschlagsdämpfer
- 12: Reibelement
- 13: Längsseite
- 14: Stift
- 15: Ausnehmung
- 16: Radiale Innenseite
- 17: Befestigungselement
- 18: Schnapphaken
- 19: Durchgangsöffnung
- 20: Außenoberfläche
- 21: Innenoberfläche
- 22: Montageausnehmung
- 23: Dämpfungsabschnitt
- 24: Kontaktabschnitt
- 25: Radiale Innenseite
- 26: Schnapphaken
- 27: Radiale Innenseite
- 28: Vertiefung

- 100: Torsionsschwingungsdämpfer
- 101: Eingangsteil
- 102: Ausgangsteil
- 103: Federeinrichtung
- 104: Rotationsachse

## Patentansprüche

1. Fliehkraftpendel (1), umfassend zwei rotationsfest miteinander verbundene Pendelflansche (2, 3), die um eine Rotationsachse (4) drehbar sind und die in Richtung der Rotationsachse (4) einen Pendelmassenaufnahmeraum (5) zwischen den Pendelflanschen (2, 3) definieren und mindestens eine in dem Pendelmassenaufnahmeraum (5) angeordnete Pendelmasse (6), die relativ zu den Pendelflanschen (2, 3) auf zumindest einer Bewegungsbahn (10) bewegbar ist, die durch Ausnehmungen (7, 8) in den Pendelflanschen (2, 3) und der Pendelmasse (6) definiert ist, wobei sich Rollenkörper (9) durch die Ausnehmungen (7, 8) erstrecken, wobei an jeder Pendelmasse (6) ein Anschlagsdämpfer (11) ausgebildet ist, wobei der Anschlagsdämpfer (11) an einer radialen Innenseite (25) der Pendelmasse (6) angeordnet ist und mindestens zwei Durchgangsöffnungen (19) aufweist, in die sich Befestigungselemente (17, 18) erstrecken, die den Anschlagsdämpfer (11) mit der Pendelmasse (6) verbinden, **dadurch gekennzeichnet, dass** jede Pendelmasse (6) mindestens ein Reibelement (12) aufweist, das in Richtung der Rotationsachse (4) auf einer Seite der Pendelmasse (6) ausgebildet ist und an der Pendelmasse (6) anliegt, wobei jedes Reibelement (12) Schnappelemente (18) als Befestigungselemente (17) aufweist, die sich in die Durchgangsöffnungen (19) des Anschlagsdämpfers (11) erstrecken.

2. Fliehkraftpendel (1) nach Anspruch 1, bei dem die Befestigungselemente (17) Stiftverbindungen umfassen.

3. Fliehkraftpendel (1) nach Anspruch 1, bei dem die Befestigungselemente (17, 18) eine Schnappverbindung bilden.

4. Fliehkraftpendel (1) nach einem der Ansprüche 1 bis 3, bei dem das Schnappelement (18) einstückig mit dem Reibelement (12) ausgebildet ist.

5. Fliehkraftpendel (1) nach einem der Ansprüche 1 bis 4, bei dem jedes Reibelement (12) mindestens zwei Stifte (14) aufweist, die in entsprechende Ausnehmungen (15) der Pendelmasse (6) eingreifen.

6. Fliehkraftpendel (1) nach einem der Ansprüche 1 bis 5, bei dem der Anschlagsdämpfer (11) zumindest teilweise aus einem elastomeren Material ausgebildet ist.

7. Torsionsschwingungsdämpfer (100), umfassend ein Eingangsteil (101), ein Ausgangsteil (102) und eine Federeinrichtung (103), wobei Eingangsteil (101) und Ausgangsteil (102) relativ zueinander gegen die Wirkung der Federeinrichtung (103) um eine Rotationsachse (104, 4) rotierbar sind, wobei Eingangsteil (101) und/oder Ausgangsteil (102) drehfest mit einem Fliehkraftpendel (1) nach einem der vorhergehenden Ansprüche verbunden sind.

## Claims

1. A centrifugal force pendulum (1) comprising two pendulum flanges (2, 3) connected to one another in a rotationally fixed manner, which are rotatable about an axis of rotation (4) and which, in the direction of the axis of rotation (4), define a pendulum mass receiving space (5) between the pendulum flanges (2, 3), and at least one pendulum mass (6) that is arranged in the pendulum mass receiving space (5) and is movable relative to the pendulum flanges (2, 3) on at least one path of motion (10) that is defined by recesses (7, 8) in the pendulum flanges (2, 3) and the pendulum mass (6), wherein roller bodies (9) extend through the recesses (7, 8), wherein a stop damper (11) is formed on each pendulum mass (6), wherein the stop damper (11) is arranged on a radially inner side (25) of the pendulum mass (6) and has at least two through-openings (19) into which fastening elements (17, 18) extend, which fastening elements connect the stop damper (11) to the pendulum mass (6), **characterised in that** each pendulum mass (6) has at least one friction element (12) that is formed on one side of the pendulum mass (6) in the direction of the axis of rotation (4) and bears against the pendulum mass (6), wherein each friction element (12) has snap elements (18) as fastening elements (17), which extend into the through-openings (19) of the stop damper (11).

2. The centrifugal force pendulum (1) according to claim 1, in which the fastening elements (17) comprise pin connections.

3. The centrifugal force pendulum (1) according to claim 1, in which the fastening elements (17, 18) form a snap connection.

4. The centrifugal force pendulum (1) according to any one of claims 1 to 3, in which the snap element (18) is integrally formed with the friction element (12).

5. The centrifugal force pendulum (1) according to any one of claims 1 to 4, in which each friction element (12) has at least two pins (14), which engage in corresponding recesses (15) of the pendulum mass (6).

6. The centrifugal force pendulum (1) according to any one of claims 1 to 5, in which the stop damper (11) is formed at least partially from an elastomeric material.

7. A torsional vibration damper (100) comprising an input part (101), an output part (102) and a spring device (103), wherein the input part (101) and the output part (102) are rotatable relative to each other against the action of the spring device (103) about an axis of rotation (104, 4), wherein the input part (101) and/or the output part (102) are connected in a rotationally fixed manner to a centrifugal force pendulum (1) according to any one of the preceding claims.

## Revendications

1. Pendule à force centrifuge (1) comprenant deux brides pendulaires (2, 3) fixées en rotation, lesquelles peuvent tourner autour d'un axe de rotation (4) et lesquelles délimitent, dans la direction de l'axe de rotation (4), un espace de réception (5) de masse pendulaire entre les brides pendulaires (2, 3) et au moins une masse pendulaire (6) disposée dans l'espace de réception (5) de masse pendulaire, laquelle peut se déplacer par rapport aux brides pendulaires (2, 3) le long d'au moins une trajectoire (10), laquelle est définie par des évidements (7, 8) dans les brides pendulaires (2, 3) et dans la masse pendulaire (6), des corps de rouleau (9) traversant les évidements (7, 8), sur chaque masse pendulaire (6) étant formé un amortisseur d'arrêt (11), l'amortisseur d'arrêt (11) étant disposé sur une surface interne (25) radiale de la masse pendulaire (6) et comportant au moins deux ouvertures traversantes (19) dans lesquelles s'étendent des éléments de fixation (17, 18), lesquels relient l'amortisseur d'arrêt (11) à la masse pendulaire (6), **caractérisé en ce que** chaque masse pendulaire (6) comporte au moins un élément de friction (12), lequel est formé dans la direction de l'axe de rotation (4) sur un côté de la masse pendulaire (6) et s'appuie contre la masse pendulaire (6), chaque élément de friction (12) comportant des éléments à encliquetage (18) comme éléments de fixation (17), lesquels s'étendent dans les ouvertures traversantes (19) de l'amortisseur d'arrêt (11).

2. Pendule à force centrifuge (1) selon la revendication 1, dans lequel les éléments de fixation (17) comprennent des liaisons par goujon.

3. Pendule à force centrifuge (1) selon la revendication 1, dans lequel les éléments de fixation (17, 18) forment une liaison par encliquetage.

4. Pendule à force centrifuge (1) selon l'une quelconque des revendications 1 à 3, dans lequel l'élément à encliquetage (18) est conçu monobloc avec l'élément de friction (12).

5. Pendule à force centrifuge (1) selon l'une quelconque des revendications 1 à 4, dans lequel chaque élément de friction (12) comporte au moins deux goujons (14), lesquels viennent en prise avec les évidements (15) correspondants de la masse pendulaire (6).

6. Pendule à force centrifuge (1) selon l'une quelconque des revendications 1 à 5, dans lequel l'amortisseur d'arrêt (11) est au moins partiellement constitué d'un matériau élastomère.

7. Amortisseur de vibrations de torsion (100) comprenant une partie d'entrée (101), une partie de sortie (102) et un dispositif à ressort (103), la partie d'entrée (101) et la partie de sortie (102) pouvant tourner l'une par rapport à l'autre à l'encontre de l'action du dispositif à ressort (103) autour d'un axe de rotation (104, 4), la partie d'entrée (101) et/ou la partie de sortie (102) étant fixées en rotation à un pendule à force centrifuge (1) selon l'une quelconque des revendications précédentes.
